# EUROPÄISCHE PATENTSCHRIFT

(11) **EP 3 593 038 B1**
(45) Veröffentlichungstag und Bekanntmachung des Hinweises auf die Patenterteilung: **23.08.2023**
(21) Anmeldenummer: 18708071.8
(22) Anmeldetag: 20.02.2018
(51) Int. Cl.: F21S 45/10, F21S 41/675, G02B 26/10, H04N 9/31

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE CONÇU POUR UN VÉHICULE AUTOMOBILE

(30) Priorität: 09.03.2017 DE 102017203892
(43) Veröffentlichungstag der Anmeldung: 15.01.2020
(73) Patentinhaber: Bayerische Motoren Werke Aktiengesellschaft, 80809 München (DE)
(72) Erfinder: ERDL, Helmut, 83126 Flintsbach (DE); HANAFI, Abdelmalek, 80686 München (DE)
(86) Internationale Anmeldenummer: PCT/EP2018/054130
(87) Internationale Veröffentlichungsnummer: WO 2018/162222

(56) Entgegenhaltungen:
- EP-A1- 2 784 568
- EP-A1- 2 821 692
- WO-A1-2016/197167
- DE-A1-102012 223 610
- DE-A1-102014 214 522
- DE-A1-102015 213 708
- JP-A- 2007 240 880

## Beschreibung

Die Erfindung betrifft eine Beleuchtungsvorrichtung für ein Kraftfahrzeug.

Aus dem Stand der Technik ist es bekannt, in einem Kraftfahrzeug eine scannende Beleuchtungsvorrichtung zu verwenden, bei der über eine Scan-Bewegung ein oder mehrere Lichtbündel einer Lichtquelle abgelenkt werden und hierüber ein Lichtspot bewegt wird, um eine vorbestimmte Lichtverteilung, wie z.B. ein Abblendlicht, im Fernfeld des Kraftfahrzeugs zu erzeugen. In solchen Beleuchtungsvorrichtungen kommen häufig sog. MEMS-Bauteile (MEMS = Micro-Electro-Mechanical System) zum Einsatz, bei denen die Ablenkung des oder der Lichtbündel über einen in einem Halbleiterchip integrierten, kontinuierlich bewegbaren Spiegel erfolgt.

Bei herkömmlichen scannenden Beleuchtungsvorrichtungen mit darin enthaltenen MEMS-Bauteilen besteht das Problem, dass bei der Erzeugung der abzulenkenden Lichtbündel über eine Laserlichtquelle eine hohe thermische Belastung des Spiegels im MEMS-Bauteil auftritt, die zu einer reduzierten Lebensdauer der Beleuchtungsvorrichtung bzw. gegebenenfalls auch zu deren Beschädigung führen kann.

Die Druckschrift DE 10 2012 223 610 A1 offenbart eine Beleuchtungsvorrichtung für ein Kraftfahrzeug gemäß dem Oberbegriff des Anspruchs 1.

Das Dokument DE 10 2014 214 522 A1 beschreibt eine Vorrichtung zur Projektion von Lichtsymbolen auf eine Fahrbahn mit einer scannenden Beleuchtungseinheit, die über einen oszillierenden Spiegel einen mittels einer Laserlichtquelle erzeugten Laserlichtspot ablenkt. Eine weitere Vorrichtung zur Projektion von Symbolen ist aus der EP2784568 A1 bekannt.

Aufgabe der Erfindung ist es, eine scannende Beleuchtungsvorrichtung für ein Kraftfahrzeug mit einem oder mehreren MEMS-Bauteilen zu schaffen, deren thermische Belastung reduziert wird.

Diese Aufgabe wird durch die Beleuchtungsvorrichtung gemäß Patentanspruch 1 gelöst.

Weiterbildungen der Erfindung sind in den abhängigen Ansprüchen definiert.

Die erfindungsgemäße Beleuchtungsvorrichtung ist für ein Kraftfahrzeug vorgesehen. Sie umfasst einen Scheinwerfer, der dazu eingerichtet ist, als vorgegebene Lichtverteilung eine Abblendlicht- und/oder Fernlichtverteilung zu generieren. Der Scheinwerfer ist vorzugsweise ein Frontscheinwerfer. Alternativ umfasst die erfindungsgemäße Beleuchtungsvorrichtung eine Fahrzeugsignalleuchte, insbesondere ein Rücklicht und/oder ein Bremslicht, die dazu eingerichtet ist, eine Signalfunktion durch die vorgegebene Lichtverteilung zu erzeugen.

Die erfindungsgemäße Beleuchtungsvorrichtung umfasst eine Laserlichtquelle aus einer Anzahl von Laserdioden (d.h. mindestens einer Laserdiode) sowie einen Vektorscanner, auf den ein oder mehrere Lichtbündel fallen, die aus dem Licht der Laserlichtquelle hervorgehen.

Der Vektorscanner ist derart ausgestaltet, dass er im Betrieb der Beleuchtungsvorrichtung die Lage des oder der Lichtbündel verändert und hierdurch einen Lichtspot, der aus dem oder den Lichtbündeln erzeugt wird, in einem Abstand von der Beleuchtungsvorrichtung bewegt, um die vorgegebene Lichtverteilung zu generieren. Die Besonderheit eines Vektorscanners besteht dabei darin, dass die Scan-Geschwindigkeit, mit der der Lichtspot bewegt wird, und/oder der Scan-Pfad, entlang dem der Lichtspot bewegt wird, durch den Vektorscanner variierbar sind. Es können somit sehr flexibel unterschiedliche Lichtverteilungen generiert werden. In diesem Merkmal unterscheidet sich ein Vektorscanner von einem herkömmlichen Zeilenscanner. Zur Variation der Scan-Geschwindigkeit bzw. des Scan-Pfads enthält der Vektorscanner eine geeignete Steuereinheit, welche gegebenenfalls in der weiter unten beschriebenen Steuereinrichtung integriert sein kann.

Der Vektorscanner der erfindungsgemäßen Beleuchtungsvorrichtung umfasst ein oder mehrere MEMS-Bauteile, welche jeweils einen Halbleiterchip beinhalten, der von einem Gehäuse umgeben ist und in dem ein einzelner Spiegel integriert ist, auf den zumindest ein Lichtbündel von dem oder den Lichtbündeln fällt. Das MEMS-Bauteil ist dabei derart ausgestaltet, dass der Spiegel zur Bewegung des Lichtspots kontinuierlich verkippt wird. In einer bevorzugten Variante weist der Spiegel in Draufsicht eine maximale Ausdehnung zwischen 1 mm und 6 mm auf. Zur Verkippung des Spiegels im MEMS-Bauteil kann eine an sich bekannte Aktorik verwendet werden, z.B. eine elektrostatische und/oder magnetische Aktorik und/oder eine Piezoaktorik. Aufgrund des Merkmals der kontinuierlichen Verkippung sowie der Verwendung eines einzelnen Spiegels unterscheidet sich das in der Erfindung verwendete MEMS-Bauteil von digitalen Lichtmodulen aus Mikrospiegeln, bei denen die Spiegel nur zwei diskrete Positionen einnehmen können.

Die erfindungsgemäße Beleuchtungsvorrichtung zeichnet sich dadurch aus, dass an einem jeweiligen MEMS-Bauteil, insbesondere innerhalb des Gehäuses eines jeweiligen MEMS-Bauteils, jedoch ggf. auch außerhalb des Gehäuses, ein Temperatursensor zur Erfassung der Temperatur des jeweiligen MEMS-Bauteils vorgesehen ist. Darüber hinaus enthält die Beleuchtungsvorrichtung eine Steuereinrichtung, welche derart ausgestaltet ist, dass sie die elektrische Leistung der Laserlichtquelle und ggf. zusätzlich die elektrische Leistung eines am MEMS-Bauteil angeordneten und elektrisch betriebenen Kühlelements (z.B. Peltier-Element) in Abhängigkeit von der erfassten Temperatur des jeweiligen MEMS-Bauteils derart steuert, dass die erfasste Temperatur einen vorgegebenen Temperaturschwellwert nicht überschreitet. Wird in der erfindungsgemäßen Beleuchtungsvorrichtung nur die elektrische Leistung der Laserlichtquelle (d.h. nicht die elektrische Leistung eines Kühlelements) gesteuert, muss die Beleuchtungsvorrichtung auch kein Kühlelement umfassen.

Die erfindungsgemäße Beleuchtungseinrichtung weist den Vorteil auf, dass auf einfache Weise über einen Temperatursensor in den jeweiligen MEMS-Bauteilen und einer darauf basierenden Temperatursteuerung eine thermische Überhitzung vermieden wird. Je nach Ausgestaltung kann der Temperatursensor auf verschiedene Weise realisiert sein. In einer bevorzugten Variante handelt es sich bei dem Temperatursensor um einen sog. Thermistor, bei dem die Erfassung der Temperatur auf einer Widerstandsmessung beruht. Im Besonderen können auch Halbleiterbauelemente als Temperatursensoren verwendet werden.

Die elektrische Leistung der Laserlichtquelle kann je nach Variante der Beleuchtungsvorrichtung unterschiedlich groß sein. In einer bevorzugten Ausgestaltung liegt die maximal einstellbare Leistung der Laserlichtquelle zwischen 100 mW und 6 W. Je nach Ausgestaltung der erfindungsgemäßen Beleuchtungsvorrichtung kann mit deren Laserlichtquelle monochromatisches Laserlicht, wie z.B. mit einer Wellenlänge von 450 nm, oder gegebenenfalls auch weißes Laserlicht generiert werden. Insbesondere besteht auch die Möglichkeit, dass hinter einer monochromatischen Laserlichtquelle ein Konvertierungselement, z.B. aus Phosphor, angeordnet ist, um das monochromatische Licht in ein Lichtbündel aus Weißlicht zu wandeln.

In einer vorteilhaften Ausführungsform der erfindungsgemäßen Beleuchtungsvorrichtung ist der Temperatursensor für zumindest ein MEMS-Bauteil innerhalb des Gehäuses des entsprechenden MEMS-Bauteils integriert.

In einer weiteren bevorzugten Variante der erfindungsgemäßen Beleuchtungsvorrichtung ist der Temperatursensor für zumindest ein MEMS-Bauteil in dem Halbleiterchip integriert. Nichtsdestotrotz besteht auch die Möglichkeit, dass der Temperatursensor für zumindest ein MEMS-Bauteil am Gehäuse des Bauteils befestigt ist und somit kein Bestandteil des Halbleiterchips ist.

In einer weiteren bevorzugten Variante liegt der Temperaturschwellwert, der aufgrund der Steuerung durch die Steuereinrichtung nicht überschritten wird, in einem Temperaturintervall, das einer Temperatur des Gehäuses des MEMS-Bauteils zwischen 60°C und 100°C, vorzugsweise zwischen 60°C und 80°C, entspricht. Durch eine solche Wahl des Temperaturschwellwerts wird effizient eine Überhitzung des Spiegels vermieden.

In einer weiteren bevorzugten Variante der Erfindung ist die Steuereinrichtung derart ausgestaltet, dass sie in einem vorbestimmten Temperaturbereich der erfassten Temperatur, der vorzugsweise am Temperaturschwellwert endet, die elektrische Leistung der Laserlichtquelle umso stärker vermindert, je stärker die erfasste Temperatur zunimmt. Die Stärke der Verminderung der elektrischen Leistung bzw. die Stärke der Zunahme der erfassten Temperatur wird insbesondere durch die Veränderung dieser Größen in einem vorbestimmten Zeitintervall repräsentiert.

In einer weiteren bevorzugten Ausführungsform ist die Steuereinrichtung der erfindungsgemäßen Beleuchtungsvorrichtung derart ausgestaltet, dass sie die Laserlichtquelle abschaltet, wenn die erfasste Temperatur den vorgegebenen Temperaturschwellwert oder den vorgegebenen Temperaturschwellwert abzüglich eines Toleranzwerts erreicht. Hierdurch wird effizient eine thermische Überbelastung der Beleuchtungsvorrichtung vermieden.

In einer weiteren Ausführungsform der erfindungsgemäßen Beleuchtungsvorrichtung umfasst der Vektorscanner ein einzelnes MEMS-Bauteil, auf dessen Spiegel das oder die Lichtbündel fallen, wobei vorzugsweise ein einzelnes Lichtbündel auf den Spiegel fällt. Je nach Verwendungszweck der Beleuchtungsvorrichtung kann dieses einzelne Lichtbündel aus Weißlicht bestehen oder auch eine andere Farbe aufweisen. Mit dieser Variante der Erfindung wird ein kompakter Aufbau der Beleuchtungsvorrichtung erreicht.

In einer weiteren Variante der Erfindung umfasst der Vektorscanner mehrere MEMS-Bauteile, auf deren Spiegel jeweils ein separates Lichtbündel aus mehreren Lichtbündeln fällt, wobei alle separaten Lichtbündel nach Passieren der MEMS-Bauteile zu dem Lichtspot überlagert werden. Vorzugsweise ergibt diese Überlagerung der separaten Lichtbündel Weißlicht, so dass sich diese Beleuchtungsvorrichtung sehr gut als Scheinwerfer eignet. Die separaten Lichtbündel weisen in diesem Fall vorzugsweise die jeweiligen Farben rot, grün und blau auf.

Neben der obigen Beleuchtungsvorrichtung betrifft die Erfindung ferner ein Kraftfahrzeug, welches eine oder mehrere erfindungsgemäße Beleuchtungsvorrichtungen bzw. eine oder mehrere bevorzugte Varianten dieser Beleuchtungsvorrichtungen umfasst.

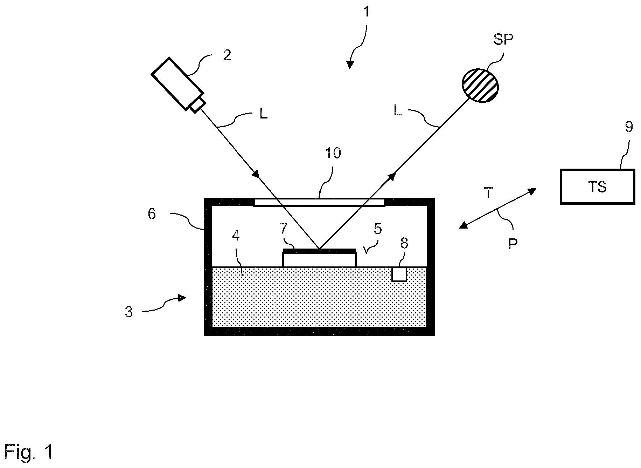

Ein Ausführungsbeispiel der Erfindung wird nachfolgend anhand der beigefügten Fig. 1 detailliert beschrieben. Diese Figur zeigt in schematischer Seitenansicht eine Variante einer erfindungsgemäßen Beleuchtungsvorrichtung.

In Fig. 1 ist eine Ausführungsform einer erfindungsgemäßen Beleuchtungsvorrichtung 1 in der Form eines Frontscheinwerfers eines Kraftfahrzeugs gezeigt. Diese Beleuchtungsvorrichtung umfasst eine Laserlichtquelle 2, welche eine und gegebenenfalls auch mehrere RGB-Laserdioden zur Erzeugung eines einzelnen weißen Laserlichtbündels L umfasst. Dieses Laserlichtbündel ist in Fig. 1 schematisch durch entsprechende Pfeile angedeutet. Die Beleuchtungsvorrichtung umfasst ferner einen Vektorscanner 3, der als ein einzelnes MEMS-Bauteil ausgebildet ist. Solche MEMS-Bauteile sind an sich bekannt und umfassen einen einzelnen Halbleiterchip, in dem eine Aktorik zur Bewegung von zumindest einem Element im Halbleiterchip integriert ist.

Das MEMS-Bauteil beinhaltet in der Ausführungsform der Fig. 1 den gerade genannten Halbleiterchip 5 umfassend ein Siliziumsubstrat 4, auf dem sich ein Spiegel 7 mit einer oberen reflektierenden Beschichtung befindet. Darüber hinaus ist in dem Halbleiterchip 5 ein Temperatursensor 8 in der Form eines Thermistors integriert, der weiter unten näher erläutert wird. Das MEMS-Bauteil beinhaltet ferner ein rechteckiges Gehäuse 6, das um den Halbleiterchip 5 herum angeordnet ist und auf dessen Oberseite ein transparentes Fenster 10 vorgesehen ist. Vorzugsweise ist dabei der Raum zwischen Halbleiterchip 5 und Gehäuse 6 mit einem Gas, wie z.B. Helium, gefüllt.

Durch das Fenster 10 fällt das von der Laserlichtquelle 2 stammende Laserlichtbündel auf den Spiegel 7. An dem Spiegel wird das Laserlichtbündel reflektiert und gelangt wieder über das Fenster 10 nach außen, um einen Lichtspot SP im Fernfeld des Kraftfahrzeugs zu generieren. Der Spiegel 7 ist dabei kontinuierlich mittels der Aktorik im Halbleiterchip bewegbar, um hierdurch eine Scan-Bewegung des Lichtspots SP zu bewirken.

Im Unterschied zu Zeilenscannern kann der Vektorscanner 3 die Scan-Geschwindigkeit, mit der der Lichtspot SP bewegt wird, sowie den Scan-Pfad, entlang dem der Lichtspot bewegt wird, variieren. Hierzu ist eine (nicht gezeigte) Steuereinheit vorgesehen, die gegebenenfalls auch in der schematisch dargestellten Steuereinrichtung 9 integriert sein kann. Über die Bewegung des Lichtspots mittels des Spiegels 7 kann variabel eine geeignete Lichtverteilung, wie z.B. eine Abblendlichtverteilung oder eine Fernlichtverteilung, durch den Scheinwerfer erzeugt werden. Die bereits erwähnte Steuereinrichtung 9 ist kommunikationstechnisch mit dem Vektorscanner 3 und auch mit einer Laserlichtquelle 2 verbunden, wie durch den Doppelpfeil P angedeutet ist.

Bei herkömmlichen Vektorscannern mit Laserlichtquelle besteht das Problem, dass es aufgrund der hohen Leistung des Laserlichts zu einer Überhitzung des MEMS-Bauteils kommen kann, da ein Teil der Laserstrahlen (in der Regel 5% oder weniger) durch den Spiegel absorbiert wird. Um einer Überhitzung des MEMS-Bauteils und einer damit verbundenen evtl. Beschädigung bzw. Zerstörung des Bauteils entgegenzuwirken, wird in der hier beschriebenen Ausführungsform der Temperatursensor 8 verwendet. Dieser Temperatursensor erfasst die Temperatur T des MEMS-Bauteils und überträgt diese an die Steuereinrichtung 9. In der Steuereinrichtung ist ein Temperaturschwellwert TS hinterlegt, der im Betrieb der Beleuchtungsvorrichtung nicht überschritten werden darf. Demzufolge beinhaltet die Steuereinrichtung eine Regelung, die ein Überschreiten dieses Temperaturschwellwerts verhindert. Der Temperaturschwellwert liegt vorzugsweise in einem Temperaturintervall, das einer Temperatur des Gehäuses des MEMS-Bauteils zwischen 60°C und 100°C, vorzugsweise zwischen 60°C und 80°C, entspricht.

Mit anderen Worten wird durch die Steuereinrichtung 9 sichergestellt, dass die erfasste Temperatur T unter dem Temperaturschwellwert TS bleibt. Dies wird in der hier beschriebenen Ausführungsform dadurch erreicht, dass die Steuereinrichtung die elektrische Leistung der Laserlichtquelle 2 verändern kann. Gelangt die erfasste Temperatur T dabei in die Nähe des Temperaturschwellwerts TS, wird die elektrische Leistung der Laserlichtquelle 2 vermindert und gegebenenfalls die Laserlichtquelle auch abgeschaltet, so dass es nicht zu einer Überhitzung des MEMS-Bauteils kommt.

In einer bevorzugten Ausführungsform der Regelung wird die Leistung der Laserlichtquelle durch die Steuereinrichtung 9 umso stärker vermindert, je stärker die erfasste Temperatur zunimmt. Die Stärke der Verminderung der Leistung wird dabei durch die Abnahme der Leistung in einem vorgegebenen Zeitintervall (z.B. 1 Sekunde) repräsentiert. Analog wird die Stärke der Zunahme der Temperatur durch den Temperaturanstieg in dem gleichen vorgegebenen Zeitintervall repräsentiert. Analog kann bei einer Abnahme der erfassten Temperatur die Leistung der Laserlichtquelle in Abhängigkeit von der Größe der Abnahme auch wieder erhöht werden. Hierdurch kann eine Regelung der Temperatur auf einen Sollwert erreicht werden, der unterhalb des Temperaturschwellwerts TS liegt.

In einer speziellen Anordnung kann das Temperatursignal des Temperatursensors auch dazu benutzt werden, um ein aktives, am MEMS-Bauteil vorgesehenes Kühlelement, wie beispielsweise ein Peltier-Element, anzusteuern, mit dem ein weiterer Temperaturanstieg verhindert werden kann. In einer weiteren Anordnung kann das Temperatursignal auch dazu benutzt werden, um bei niedrigen Temperaturen, wie beispielsweise für Temperaturen unter-30°C, eine am MEMS-Bauteil angeordnete Heizung anzusteuern, um den Vektorscanner in einem günstigen Arbeitsbereich zu halten.

Im Vorangegangenen wurde die Erfindung anhand einer Beleuchtungsvorrichtung mit einer RGB-Laserlichtquelle beschrieben, welche Weißlicht generiert, das auf ein einzelnes MEMS-Bauteil fällt. Gegebenenfalls ist es auch möglich, dass die Laserlichtquelle eine monochromatische Laserlichtquelle, wie z.B. eine blaue Laserlichtquelle, ist. Das Licht dieser Laserlichtquelle kann dabei über eine Phosphorschicht in weißes Laserlicht gewandelt werden, welches anschließend analog zur Ausführungsform der Fig. 1 auf ein MEMS-Bauteil fällt. Ebenso besteht die Möglichkeit, dass drei Laserlichtbündel mit den Farben rot, grün und blau erzeugt werden, wobei jedes dieser Laserlichtbündel auf ein separates MEMS-Bauteil mit entsprechendem Spiegel fällt. Durch synchrone Bewegung der Spiegel werden die einzelnen Lichtbündel dann zu einem gemeinsamen Lichtspot zusammengeführt, der durch die Mischung der Farben rot, grün und blau in weißer Farbe erscheint.

Darüber hinaus muss der Temperatursensor 8 nicht zwangsläufig direkt in dem Halbleiterchip des MEMS-Bauteils integriert sein. Vielmehr kann der Temperatursensor auch außerhalb des Halbleiterchips, jedoch innerhalb des MEMS-Bauteils befestigt sein, z.B. auf der Innenseite des Gehäuses 6. Gegebenenfalls kann der Temperatursensor auch am MEMS-Bauteil an einem Ort außerhalb des Gehäuses 6 befestigt sein.

Die Erfindung ist ferner auch nicht auf eine Beleuchtungsvorrichtung in der Form eines Kraftfahrzeugscheinwerfers beschränkt. Vielmehr kann es sich bei der Beleuchtungsvorrichtung auch um eine Fahrzeugsignalleuchte, wie z.B. das Rücklicht eines Kraftfahrzeugs, handeln, wobei in diesem Fall vorzugsweise ein farbiger Lichtspot, z.B. in roter Farbe, generiert wird.

Die im Vorangegangenen beschriebenen Ausführungsformen der Erfindung weisen eine Reihe von Vorteilen auf. Insbesondere wird in einer Beleuchtungsvorrichtung, welche einen variabel einstellbaren Vektorscanner und eine Laserlichtquelle umfasst, in geeigneter Weise sichergestellt, dass es nicht zu einer Überhitzung des als MEMS-Bauteil ausgestalteten Vektorscanners kommt. Dies wird durch einen Temperatursensor im MEMS-Bauteil erreicht. In Abhängigkeit von der durch diesen Temperatursensor erfassten Temperatur wird dabei mittels einer Regelung bewirkt, dass ein Temperaturschwellwert nicht überschritten wird.

### Bezugszeichenliste

- 1: Beleuchtungsvorrichtung
- 2: Laserlichtquelle
- 3: Vektorscanner
- 4: Substrat
- 5: Halbleiterchip
- 6: Gehäuse
- 7: Spiegel
- 8: Temperatursensor
- 9: Steuereinrichtung
- 10: Fenster
- P: Doppelpfeil
- T: erfasste Temperatur
- TS: Temperaturschwellwert
- L: Lichtbündel
- SP: Lichtspot

## Patentansprüche

1. Beleuchtungsvorrichtung für ein Kraftfahrzeug, umfassend einen Scheinwerfer, der dazu eingerichtet ist, als eine vorgegebene Lichtverteilung eine Abblendlicht- und/oder Fernlichtverteilung zu generieren, oder umfassend eine Fahrzeugsignalleuchte, die dazu eingerichtet ist, eine Signalfunktion durch eine vorgegebene Lichtverteilung zu erzeugen, wobei die Beleuchtungsvorrichtung eine Laserlichtquelle (2) aus einer Anzahl von Laserdioden sowie einen Vektorscanner (3) umfasst, auf den ein oder mehrere Lichtbündel (L) fallen, die aus dem Licht der Laserlichtquelle (2) hervorgehen, wobei der Vektorscanner (3) im Betrieb der Beleuchtungsvorrichtung (1) die Lage des oder der Lichtbündel (L) verändert und hierdurch einen Lichtspot (SP), der aus dem oder den Lichtbündeln (L) erzeugt wird, in einem Abstand von der Beleuchtungsvorrichtung (1) bewegt, um die vorgegebene Lichtverteilung zu generieren, wobei die Scan-Geschwindigkeit, mit der der Lichtspot (SP) bewegt wird, und/oder der Scan-Pfad, entlang dem der Lichtspot (SP) bewegt wird, durch den Vektorscanner (3) variierbar sind;
wobei der Vektorscanner (3) ein oder mehrere MEMS-Bauteile umfasst, welche jeweils einen Halbleiterchip (5) beinhalten, der von einem Gehäuse (6) umgeben ist und in dem ein einzelner Spiegel (7) integriert ist, auf den zumindest ein Lichtbündel (L) von dem oder den Lichtbündeln (L) fällt, wobei das MEMS-Bauteil derart ausgestaltet ist, dass der Spiegel (7) zur Bewegung des Lichtspots (SP) kontinuierlich verkippt wird;
**dadurch gekennzeichnet, dass** an einem jeweiligen MEMS-Bauteil ein Temperatursensor (8) zur Erfassung der Temperatur (T) des jeweiligen MEMS-Bauteils vorgesehen ist;
wobei die Beleuchtungsvorrichtung (1) ferner eine Steuereinrichtung (9) umfasst, welche derart ausgestaltet ist, dass sie die elektrische Leistung der Laserlichtquelle (2) in Abhängigkeit von der erfassten Temperatur (T) des jeweiligen MEMS-Bauteils derart steuert, dass die erfasste Temperatur (T) einen vorgegebenen Temperaturschwellwert (TS) nicht überschreitet.

2. Beleuchtungsvorrichtung nach Anspruch 1, **dadurch gekennzeichnet, dass** der Temperatursensor (8) für zumindest ein MEMS-Bauteil innerhalb des Gehäuses (6) integriert ist.

3. Beleuchtungsvorrichtung nach Anspruch 1 oder 2, **dadurch gekennzeichnet, dass** der Temperatursensor (8) für zumindest ein MEMS-Bauteil in dem Halbleiterchip (5) integriert ist.

4. Beleuchtungsvorrichtung nach einem der vorhergehenden Ansprüche, **dadurch gekennzeichnet, dass** der Temperatursensor (8) für zumindest ein MEMS-Bauteil am Gehäuse (6) befestigt ist.

5. Beleuchtungsvorrichtung nach einem der vorhergehenden Ansprüche, **dadurch gekennzeichnet, dass** der Temperaturschwellwert (TS) in einem Temperaturintervall liegt, das einer Temperatur des Gehäuses (6) des MEMS-Bauteils zwischen 60°C und 100°C, vorzugsweise zwischen 60°C und 80°C, entspricht.

6. Beleuchtungsvorrichtung nach einem der vorhergehenden Ansprüche, **dadurch gekennzeichnet, dass** die Steuereinrichtung (9) derart ausgestaltet ist, dass sie in einem vorbestimmten Temperaturbereich der erfassten Temperatur (T) die elektrische Leistung der Laserlichtquelle (2) umso stärker vermindert, je stärker die erfasste Temperatur (T) zunimmt.

7. Beleuchtungsvorrichtung nach einem der vorhergehenden Ansprüche, **dadurch gekennzeichnet, dass** die Steuereinrichtung (9) derart ausgestaltet ist, dass sie die Laserlichtquelle (2) abschaltet, wenn die erfasste Temperatur (T) den vorgegebenen Temperaturschwellwert (TS) oder den vorgegebenen Tempertaturschwellwert (TS) abzüglich eines Toleranzwerts erreicht.

8. Beleuchtungsvorrichtung nach einem der vorhergehenden Ansprüche, **dadurch gekennzeichnet, dass** die Fahrzeugsignalleuchte ein Rücklicht und/oder ein Bremslicht ist.

9. Beleuchtungsvorrichtung nach einem der vorhergehenden Ansprüche, **dadurch gekennzeichnet, dass** der Vektorscanner (3) ein einzelnes MEMS-Bauteil umfasst, auf dessen Spiegel (8) das oder die Lichtbündel (L) fallen, wobei vorzugsweise ein einzelnes Lichtbündel (L) auf den Spiegel (8) fällt.

10. Beleuchtungsvorrichtung nach einem der Ansprüche 1 bis 8, **dadurch gekennzeichnet, dass** der Vektorscanner (3) mehrere MEMS-Bauteile umfasst, auf deren Spiegel (8) jeweils ein separates Lichtbündel aus mehreren Lichtbündeln (L) fällt, wobei alle separaten Lichtbündel (L) nach Passieren der MEMS-Bauteile zu dem Lichtspot überlagert werden.

11. Kraftfahrzeug, umfassend eine oder mehrere Beleuchtungsvorrichtungen (1) nach einem der vorhergehenden Ansprüche.

## Claims

1. Lighting apparatus for a motor vehicle, comprising a headlight configured to generate as specified light distribution a dipped light and/or main beam distribution, or comprising a vehicle signal lamp configured to generate a signal function by way of a specified light distribution, wherein the lighting apparatus comprises a laser light source (2), consisting of a number of laser diodes, and also a vector scanner (3) on which one or more light beams (L) are incident which emanate from the light of the laser light source (2), wherein in operation of the lighting apparatus (1) the vector scanner (3) varies the position of the light beam or beams (L) and thereby moves a light spot (SP), which is generated from the light beam or beams (L), at a distance from the lighting apparatus (1) in order to generate the specified light distribution, wherein the scan speed at which the light spot (SP) is moved and/or the scan path along which the light spot (SP) is moved can be varied by the vector scanner (3);
wherein the vector scanner (3) comprises one or more MEMS components which each include a semiconductor chip (5), which is surrounded by a housing (6) and within which an individual mirror (7) is integrated, on which at least one light beam (L) from the light beam or beams (L) is incident, wherein the MEMS component is designed in such a manner that the mirror (7) is tilted continuously for the purpose of moving the light spot (SP);
**characterized in that** a temperature sensor (8) for measuring the temperature (T) of the respective MEMS component is provided on a respective MEMS component; wherein the lighting apparatus (1) further comprises a control device (9) which is designed in such a manner that it controls the electrical power of the laser light source (2) as a function of the measured temperature (T) of the respective MEMS component in such a manner that the measured temperature (T) does not exceed a specified temperature threshold value (TS).

2. Lighting apparatus according to Claim 1, **characterized in that** the temperature sensor (8) for at least one MEMS component is integrated within the housing (6) .

3. Lighting apparatus according to Claim 1 or 2, **characterized in that** the temperature sensor (8) for at least one MEMS component is integrated within the semiconductor chip (5).

4. Lighting apparatus according to any of the preceding claims, **characterized in that** the temperature sensor (8) for at least one MEMS component is attached to the housing (6) .

5. Lighting apparatus according to any of the preceding claims, **characterized in that** the temperature threshold value (TS) lies within a temperature interval that corresponds to a temperature of the housing (6) of the MEMS component between 60°C and 100°C, preferably between 60°C and 80°C.

6. Lighting apparatus according to any of the preceding claims, **characterized in that** the control device (9) is designed in such a manner that within a predetermined temperature-range of the measured temperature (T) it decreases the electrical power of the laser light source (2) the more intensely, the more intensely the measured temperature (T) increases.

7. Lighting apparatus according to any of the preceding claims, **characterized in that** the control device (9) is designed in such a manner that it switches off the laser light source (2) if the measured temperature (T) reaches the specified temperature threshold value (TS), or the specified temperature threshold value (TS) minus a tolerance value.

8. Lighting apparatus according to any of the preceding claims, **characterized in that** the vehicle signal lamp is a tail-light and/or a brake-light.

9. Lighting apparatus according to any of the preceding claims, **characterized in that** the vector scanner (3) comprises an individual MEMS component on the mirror (8) of which the light beam or beams (L) are incident, wherein an individual light beam (L) is preferably incident on the mirror (8).

10. Lighting apparatus according to any of Claims 1 to 8, **characterized in that** the vector scanner (3) comprises a plurality of MEMS components on the mirrors (8) of which a separate light beam from a plurality of light beams (L) are incident in each case, wherein all the separate light beams (L) are superposed to produce the light spot after passing through the MEMS components.

11. Motor vehicle comprising one or more lighting apparatuses (1) according to any of the preceding claims.

## Revendications

1. Dispositif d'éclairage pour un véhicule automobile, comprenant un phare qui est conçu pour générer une distribution de feux de croisement et/ou de feux de route comme une distribution de lumière prédéfinie, ou comprenant un feu de signalisation de véhicule qui est conçu pour générer une fonction de signal par une distribution de lumière prédéfinie, dans lequel le dispositif d'éclairage comprend une source de lumière laser (2) composée d'un certain nombre de diodes laser ainsi qu'un scanner vectoriel (3) sur lequel un ou plusieurs faisceaux lumineux (L) sont incidents qui émanent de la lumière de la source de lumière laser (2), dans lequel le scanner vectoriel (3) modifie en cours de fonctionnement du dispositif d'éclairage (1) la position du ou des faisceaux lumineux (L) et déplace ainsi un spot de lumière (SP), qui est généré à partir du ou des faisceaux lumineux (L), à une distance du dispositif d'éclairage (1) pour générer la distribution de lumière prédéfinie, dans lequel le scanner vectoriel (3) peut faire varier la vitesse de balayage à laquelle le spot de lumière (SP) est déplacé et/ou le trajet de balayage le long duquel le spot de lumière (SP) est déplacé ;
dans lequel le scanner vectoriel (3) comprend un ou plusieurs composants MEMS qui comportent respectivement une puce semi-conductrice (5) qui est entourée d'un boîtier (6) et dans laquelle un seul miroir (7) est intégré sur lequel au moins un faisceau lumineux (L) du ou des faisceaux lumineux (L) est incident, dans lequel le composant MEMS est configuré de telle sorte que le miroir (7) est incliné en continu pour déplacer le spot de lumière (SP) ;
**caractérisé en ce qu'**un capteur de température (8) pour détecter la température (T) du composant MEMS respectif est prévu sur un composant MEMS respectif ;
dans lequel le dispositif d'éclairage (1) comprend en outre un moyen de commande (9) qui est configuré de telle sorte qu'il commande la puissance électrique de la source de lumière laser (2) en fonction de la température détectée (T) du composant MEMS respectif de telle sorte que la température détectée (T) ne dépasse pas une valeur seuil de température (TS) prédéfinie.

2. Dispositif d'éclairage selon la revendication 1, **caractérisé en ce que** le capteur de température (8) pour au moins un composant MEMS est intégré à l'intérieur du boîtier (6).

3. Dispositif d'éclairage selon la revendication 1 ou 2, **caractérisé en ce que** le capteur de température (8) pour au moins un composant MEMS est intégré dans la puce semi-conductrice (5).

4. Dispositif d'éclairage selon l'une quelconque des revendications précédentes, **caractérisé en ce que** le capteur de température (8) pour au moins un composant MEMS est fixé au boîtier (6).

5. Dispositif d'éclairage selon l'une quelconque des revendications précédentes, **caractérisé en ce que** la valeur seuil de température (TS) est comprise dans un intervalle de température qui correspond à une température du boîtier (6) du composant MEMS entre 60 °C et 100 °C, de préférence entre 60 °C et 80 °C.

6. Dispositif d'éclairage selon l'une quelconque des revendications précédentes, **caractérisé en ce que** le moyen de commande (9) est configuré de telle sorte que dans une plage de température prédéterminée de la température détectée (T), il diminue la puissance électrique de la source de lumière laser (2) d'autant plus que la température détectée (T) augmente fortement.

7. Dispositif d'éclairage selon l'une quelconque des revendications précédentes, **caractérisé en ce que** le moyen de commande (9) est configuré de telle sorte qu'il déconnecte la source de lumière laser (2) si la température détectée (T) atteint la valeur seuil de température (TS) prédéfinie ou la valeur seuil de température (TS) prédéfinie moins une valeur de tolérance.

8. Dispositif d'éclairage selon l'une quelconque des revendications précédentes, **caractérisé en ce que** le feu de signalisation de véhicule et un feu arrière et/ou un feu de freinage.

9. Dispositif d'éclairage selon l'une quelconque des revendications précédentes, **caractérisé en ce que** le scanner vectoriel (3) comprend un seul composant MEMS sur le miroir (8) duquel le ou les faisceaux lumineux (L) sont incidents, dans lequel de préférence un seul faisceau lumineux (L) est incident sur le miroir (8).

10. Dispositif d'éclairage selon l'une quelconque des revendications 1 à 8, **caractérisé en ce que** le scanner vectoriel (3) comprend plusieurs composants MEMS sur les miroirs (8) desquels respectivement un faisceau lumineux séparé parmi plusieurs faisceaux lumineux (L) est incident, dans lequel tous les faisceaux lumineux séparés (L) sont superposés au spot de lumière après le passage par les composants MEMS.

11. Véhicule automobile, comprenant un ou plusieurs dispositifs d'éclairage (1) selon l'une quelconque des revendications précédentes.
